# EUROPÄISCHE PATENTSCHRIFT

(11) **EP 3 317 160 B1**
(45) Veröffentlichungstag und Bekanntmachung des Hinweises auf die Patenterteilung: **09.06.2021**
(21) Anmeldenummer: 16731585.2
(22) Anmeldetag: 22.06.2016
(51) Int. Cl.: B62D 1/16

(54) **TRANSPORTSICHERUNG FÜR EINE LENKSÄULE FÜR EIN KRAFTFAHRZEUG**
TRANSPORT LOCK FOR A STEERING COLUMN FOR A VEHICLE
VERROU POUR UNE COLONNE DE DIRECTION POUR UN VEHICULE

(30) Priorität: 01.07.2015 DE 102015212320
(43) Veröffentlichungstag der Anmeldung: 09.05.2018
(73) Patentinhaber: thyssenkrupp Presta AG, 9492 Eschen (LI); thyssenkrupp AG, 45143 Essen (DE)
(72) Erfinder: BECHMANN, Kai, McCordsville, IN 46055 (US)
(74) Vertreter: thyssenkrupp Intellectual Property GmbH
(86) Internationale Anmeldenummer: PCT/EP2016/064391
(87) Internationale Veröffentlichungsnummer: WO 2017/001257

(56) Entgegenhaltungen:
- EP-A1- 2 607 203
- DE-U1-202013 009 280
- US-A1- 2007 137 376
- US-A1- 2010 300 238
- US-A1- 2014 238 179

## Beschreibung

### Stand der Technik

Die Erfindung betrifft eine Sicherungsvorrichtung für eine Lenksäule für ein Kraftfahrzeug, die einsetzbar ist zwischen einer Manteleinheit und einer drehbar in dieser gelagerten Lenkwelle zur zeitweiligen Blockierung einer Drehbewegung der Lenkwelle relativ zur Manteleinheit, umfassend ein langgestrecktes Riegelelement, welches sich in Längsrichtung erstreckt, an dessen einem Ende ein Griffelement angebracht ist und dessen anderes Ende als freies Ende ausgebildet ist, wobei das Riegelement einen Grundkörper aus weichem Kunststoffmaterial aufweist wobei sich zumindest über einen Teilbereich der Längsrichtung des Riegelelements ein Armierungselement erstreckt.

In einem Kraftfahrzeug dient die Lenksäule zur Übertragung des Lenkmoments, welches von einem Fahrer über das Lenkrad in die Lenkwelle eingebracht wird, und durch ein Lenkgetriebe in eine translatorische Bewegung von Spurstangen umgesetzt wird, welche den Lenkeinschlag der gelenkten Räder bewirkt. Die Lenksäule bildet eine Baugruppe, die in der einfachsten Ausführung eine Manteleinheit umfasst, welche mit der Fahrzeugkarosserie verbunden ist und die Lenkwelle drehbar lagert. Am bezüglich der Fahrtrichtung hinteren Ende, welches aus der Manteleinheit vorsteht, wird das Lenkrad montiert. Üblicherweise ist die Manteleinheit ihrerseits in einer Halteklammer oder einem Führungskasten gehaltert und in Richtung der Lenkwellen-Achse und/oder in Höhenrichtung verstellbar an einer an der Fahrzeugkarosserie anbringbaren Konsoleneinheit gelagert, so dass die Position des Lenkrads relativ zum Fahrer einstellbar ist. Ebenfalls sind aus dem Stand so genannte Steer-by-Wire Lenksäulen bekannt, bei denen die Lenkwelle keine mechanische Verbindung zu den gelenkten Rädern aufweist, sondern lediglich mit einem sogenannten Handmomentensteller wirkverbunden ist, der eine Simulation des Lenkgefühls als Drehmoment in die Lenkwelle einleitet.

Bei der Fertigung eines Kraftfahrzeugs wird die Lenksäule als vorgefertigte Baugruppe angeliefert, welche zumindest die Lenkwelle und die Manteleinheit sowie in der Regel die Vorrichtungen zur Positionsverstellung aufweist. In nachfolgenden Montageschritten erfolgt die Anbringung weiterer Funktionselemente wie Lenkrad, Lenkradschloss, Wegfahrsperre, elektrischen Schaltereinheiten, beispielsweise ein Lenkstockschaltermodul, und dergleichen an der Lenksäule sowie die Montage der Lenksäule im Fahrzeug. Bei bestimmten Montageschritten ist eine bestimmte Winkelorientierung der Lenkwelle relativ zur Manteleinheit erforderlich. Zur Gewährleistung einer rationellen Produktion wird bei der Fertigung der Lenksäule die Lenkwelle in der Manteleinheit in eine vorgegebene Winkelposition gebracht und in dieser Stellung provisorisch, d.h. zeitweilig fixiert, so dass die Lenksäule lagerichtig und montagebereit zu den weiteren Montageschritten angeliefert werden kann.

Zur Sicherung der Winkelposition ist es bekannt, eine gattungsgemäße Sicherungsvorrichtung so in die Lenksäule einzusetzen, dass eine Verdrehung der Lenkwelle in der Manteleinheit blockiert wird. Die relative Fixierung erfolgt, indem ein Riegelelement in Form eines im Wesentlichen stiftförmigen Riegelkörpers mit seinem freien Ende durch eine Ausnehmung oder Öffnung in der Manteleinheit quer zur Lenkwellen-Achse eingesteckt und mit einem an der Lenkwelle ausgebildeten Formschlusselement in Eingriff gebracht wird, beispielsweise einer Radialbohrung, wodurch eine Verdrehsicherung wie mit einem Splint realisiert wird. Zur Aufhebung der provisorischen Fixierung nach der Montage wird das Riegelelement aus der Lenksäule entfernt, indem das Riegelelement entgegen der Einsetzrichtung aus der Mantel-einheit herausgezogen wird.

Zum leichten Einsetzen und Herausnehmen ist bei den im Stand der Technik bekannten Sicherungsvorrichtungen - wie beispielsweise in der DE 691 00 826 T2, US 20140238179A1 oder DE 20 2013 009 280 U1 beschrieben - an einem Ende des Riegelelements ein Griff-element angebracht, an dem die Sicherungsvorrichtung mit der Hand gegriffen und das Riegelelement mit seinem freien Ende voraus in Längsrichtung eingesteckt bzw. aus der Lenksäule herausgezogen werden kann.

Um eine beim Transport in gesichertem Zustand auch kleine Beschädigungen wie Kratzer oder Macken zu vermeiden, kann das Riegelelement außen aus einem Material gefertigt sein, welches weicher ist als das Material von Manteleinheit und Lenkwelle, beispielsweise aus Kunststoff wie in der DE 20 2013 009 280 U1 beschrieben. Allerdings muss dabei sichergestellt sein, dass das Riegelelement zur Lösung der provisorischen Fixierung einfach, sicher und vollständig aus der Lenksäule herausgezogen werden kann, ohne dass Teile des Riegelelements abreißen oder abbrechen und innerhalb der Manteleinheit verbleiben, die auf jeden Fall entfernt werden müssen, was zu Störungen im Produktionsablauf führt. Dies kann bei der Verwendung eines relativ weichen Kunststoffmaterials bei den konstruktionsbedingt kleinen Materialquerschnitten nicht sicher gewährleistet werden, beispielsweise wenn die Sicherungsvorrichtung beim Herausziehen des Riegelelements zwischen Manteleinheit und Lenkwelle auf Scherung belastet wird oder verkantet, insbesondere dann, wenn das Riegelelement eine Rastvertiefung oder dergleichen aufweist zur Verbesserung der provisorischen Fixierung. Ein Abriss oder Teilabriss des Riegelelements wird bei den Sicherungsvorrichtungen gemäß DE 20 2013 009 280 U1 und DE 691 00 826 T2 dadurch begünstigt, dass der Kunststoff-Querschnitt durch einen in Längsrichtung eingebrachten Nut oder Schlitz zusätzlich strukturell geschwächt ist. Das in der gattungsbildenden DE 20 2013 009 280 U1 in Längsrichtung leicht lösbar an dem Riegelelement angebrachte Armierungselement kann einen Abriss oder Teilabriss des Riegelelements nicht verhindern.

Angesichts der vorangehend erläuterten Problematik ist es eine Aufgabe der vorliegenden Erfindung, eine Sicherungsvorrichtung der eingangs genannten Art zur Verfügung zu stellen, bei dem ein Abriss oder Teilabriss des Riegelelements beim Herausziehen sicher verhindert werden kann, insbesondere bei einer kostengünstig aus einem relativ weichen Material gefertigten Sicherungsvorrichtung.

### Darstellung der Erfindung

Zur Lösung der vorgenannten Problematik wird erfindungsgemäß vorgeschlagen, dass das Armierungselement als Zugarmierungselement ausgebildet ist, welches fest in das Kunststoffmaterial eingebettet ist und welches in Längsrichtung zugfest mit dem Riegelelement verbunden ist.

Erfindungsgemäß ist das Riegelelement in Längsrichtung, also der Richtung, die beim Herausziehen der Sicherungsvorrichtung aus einer Lenksäule auf Zug beansprucht wird, mit einem zusätzlichen Lastaufnahmeelement in Form einer Zugarmierung versehen, welches die maximal auftretenden Zugkräfte sicher aufnehmen kann. Die Zugarmierung wird gebildet durch zumindest ein auf Zug beanspruchbares Armierungs- oder Bewehrungselement, welches sich zumindest über einen Teilbereich der Länge des Riegelelements erstreckt, beispielsweise über einen Bereich in der Nähe des Griffelements, wo beim Herausziehen der Sicherungsvorrichtung lokal relativ große Spannungen (Zug- und/oder Biegespannungen) auftreten. Die Aufnahme der auftretenden Zugkräfte kann bei der erfindungsgemäßen Sicherungsvorrichtung zu einem größeren Teil durch die Zugarmierung erfolgen, wodurch das Grundmaterial, also das Kunststoffmaterial, aus dem der Grundkörper des Riegelelements gebildet wird, hinsichtlich der Zugbeanspruchung entlastet wird. Die dazu erforderliche Krafteinleitung wird dadurch gewährleistet, dass die Zugarmierung bezüglich der Längsrichtung des Riegelelements die Teilbereiche über die Länge des Zugarmierungselements zugfest miteinander verbindet, dabei zumindest die in Längsrichtung zumindest vor und hinter dem Armierungselement liegenden Teilbereiche. Dadurch wird gewährleistet, dass diese Teilbereiche durch die Zugarmierung auch dann zugfest miteinander verbunden bleiben, wenn das Grundmaterial, d.h. das Material, aus dem der Grundkörper des Riegelelements gebildet wird, aufgrund ungünstiger oder zu hoher Beanspruchung bricht oder reißt.

Gegebenenfalls kann sich die Zugarmierung über die Gesamtlänge des Riegelelements erstrecken, und gegebenenfalls in Längsrichtung über das Riegelelement hinaus bis zum oder in das Griffelement.

Durch die erfindungsgemäße Zugarmierung ist sichergestellt, dass die Sicherungsvorrichtung als Ganzes zur Aufhebung der provisorischen Fixierung aus der Lenksäule herausgezogen werden kann, ohne dass Teilstücke abreißen oder abbrechen und zwischen Lenkwelle und Manteleinheit zurückbleiben. Dies gilt insbesondere auch für ungünstige Bedingungen, beispielsweise wenn das Riegelelement beim Entnehmen verkantet oder abgeknickt wird.

Eine hohe Belastbarkeit kann dadurch realisiert werden, dass das Zugarmierungselement mindestens ein faserförmiges Element umfasst. Das Zugarmierungselement kann eine oder mehrere Fasern umfassen, die einzeln oder im Verbund als Bündel oder Geflecht angeordnet sein können. Es können metallische Fasern - Drahtfasern - verwendet werden, welche hinsichtlich Länge, Querschnitt und Verlauf an die zu erwartenden Belastungen angepasst sind. Bevorzugt kann Stahldraht eingesetzt werden, gegebenenfalls auch Federstahldraht, der bei einer Verformung der Sicherungsvorrichtung eine elastische Rückstellung in die ursprüngliche Form bewirken kann. Alternativ können zugfeste Fasern aus organischem Material eingesetzt werden, beispielsweise aus Kohlenstofffaser, Aramid oder dergleichen.

Die erfindungsgemäß vorgesehene Zugarmierung kann aus einem Material gebildet werden, welches in seinen Materialeigenschaften optimal an die zu erwartende Zugbeanspruchung angepasst ist, beispielsweise kann ein Material mit hoher Festigkeit verwendet werden. Um den dabei möglichen Zielkonflikt zu vermeiden, dass derartige Materialien aufgrund ihrer einerseits vorteilhaften hohen Festigkeit andererseits eine Beschädigung der Oberflächen der Lenksäule verursachen können, kann die Zugarmierung im Riegelelement mit weicheren Materialen kombiniert werden. Die weicheren Materialen werden bevorzugt in möglichen Kontaktbereichen des Riegelelements mit den Oberflächen angeordnet, zu dass beim Kontakt auch mit höheren Kräften die Bildung von Kratzern, Macken oder ähnlichen Schäden sicher verhindert werden kann. Dadurch, dass dank der erfindungsgemäßen Zugarmierung die Zug- bzw. Reißfestigkeit der weicheren Materialen von untergeordneter Bedeutung ist, können weiche, oberflächenschonende Materialen verwendet werden. Dies ermöglicht weiterhin die Verwendung relativ kostengünstiger Materialien.

Eine vorteilhafte Ausführungsform der Erfindung sieht vor, dass das Riegelelement ein erstes Material umfasst, und das Zugarmierungselement ein zweites Material umfasst, wobei das zweite Material eine höherer Reißfestigkeit und/oder höhere Zähigkeit und/oder höhere Biegefestigkeit und/oder höheres Elastizitätsmodul hat, als das erste Material des Riegelelements. Dabei handelt es sich um eine Ausführung der vorangehend erläuterten Kombination von Materialien mit unterschiedlichen, an die jeweiligen Anforderungen angepassten Materialeigenschaften. Mit Vorteil besteht der Grundkörper des Riegelelements aus einem relativ weichen Kunststoffmaterial , welches eine Beschädigung der aus Metall bestehenden Teile der Lenksäule weitgehend ausschließt. Aus derartigen Kunststoffmaterialen, beispielsweise thermoplastischen Polymeren wie Polyoxymethylen, aus denen bereits die im Stand der Technik existierenden Sicherungsvorrichtungen bestehen, lassen sich mit geeigneten Herstellungsverfahren, beispielsweise im Kunststoff-Spritzguss, Sicherungsvorrichtungen mit nahezu beliebig geformten, an die jeweilige Anwendung angepassten Riegelelementen rationell fertigen. Das Zugarmierungselement kann davon unabhängig aus einem Material gefertigt werden, welches besonders gut zur Aufnahme einer Zugbeanspruchung ausgelegt ist, beispielsweise eine höhere Reißfestigkeit hat, oder, im Falle einer am Griffelement schräg ansetzenden Zugkraft, eine höhere Biegefestigkeit hat als der aus relativ weichen Kunststoff gebildete Grundkörper des Riegelelements. Grundsätzlich kann das Zugarmierungselement beispielsweise aus hochfestem Kunststoff bestehen, wie beispielsweise Aramid, Carbon oder dergleichen. Eine ebenfalls gut geeignete, besonders zug- und reißfeste und dabei kostengünstige Alternative sieht vor, dass das Zugarmierungselement aus Metall besteht, beispielsweise Stahl oder Federstahl. Der Einsatz von Metall hat den weiteren Vorteil, dass ausgereifte, rationelle Fertigungsverfahren zur Verfügung stehen, um die Zugarmierungselemente optimal an Form und funktionale Eigenschaften der Sicherungsvorrichtung anzupassen. Das Kunststoffmaterial wird bezüglich des Zugarmierungselements bevorzugt so angeordnet, dass mögliche Kontaktflächen der Sicherungsvorrichtung mit Komponenten der Lenksäule mit Kunststoff abgedeckt sind. Das kann dadurch erreicht werden, dass das Zugarmierungselement zumindest teilweise, bevorzugt vollständig von dem Material des Riegelelement umschlossen ist., d.h. das Zugarmierungselement ganz oder teilweise von Kunststoff umschlossen bzw. ummantelt ist. Dadurch wird beispielsweise bei einem aus Metall bestehenden Zugarmierungselement ein unerwünschter Metall-Metall-Kontakt mit der Lenksäule zuverlässig vermieden.

Eine Abdeckung zum Schutz der Oberflächen wird erfindungsgemäss dadurch realisiert werden, dass das Riegelelement als Kunststoff-Spritzgussteil ausgebildet ist und das Zugarmierungselement von dem Kunststoffmaterial umspritzt ist. Im Spritzgussverfahren kann das Zugarmierungselement in die Spritzgussform eingelegt werden, die mit der dünnflüssigen Kunststoffschmelze gefüllt wird. Dabei wird das Zugarmierungselement in das Kunststoffmaterial eingebettet, wobei es formschlüssig mit dem Kunststoff verbunden wird, was eine belastbare zugfeste Befestigung am Riegelelement erzeugt. Zur Verbesserung der Haftung kann die Oberfläche des Zugarmierungselement mit einer haftvermittelnden Beschichtung (Primer) oder Oberflächenstruktur versehen sein, beispielsweise mit einer Aufrauhung oder einer definierten Strukturierung. Mittels Kunststoff-Spritzguss kann eine rationelle Fertigung in hohen Stückzahlen erfolgen.

Die Spritzgussform umfasst bevorzugt zwei Haltestifte, die auch als Haltestruktur bezeichnet werden kann. Auf diese Haltestifte wird das Zugarmierungselement aufgelegt und durch diese gehalten, während die Kunststoffschmelze in die Spritzgussform gefüllt wird. Nach dem Entfernen der Sicherungsvorrichtung aus der Spritzgussform weist die Sicherungsvorrichtung Ausnehmungen in der Umspritzung der Sicherungsvorrichtung auf, wobei die Ausnehmungen durch die Haltestruktur für das Zugarmierungselement entstanden sind.

Ebenfalls ist es denkbar und möglich, das Zugarmierungselement in das bevorzugt vorgewärmte Riegelelement eingzupressen. Die Temperatur des Riegelelements ist dabei bevorzugt unterhalb der Schmelztemperatur bzw. unterhalb der Glasübergangstemperatur.

Eine Ausführung der Erfindung sieht vor, dass das Zugarmierungselement zumindest ein Ankerelement umfasst, welches quer zur Längsrichtung formschlüssig mit dem Riegelelement verbunden ist. Das Ankerelement dient zur Verankerung des Zugarmierungselements in Längsrichtung am oder im Riegelelement, was durch eine zugfeste formschlüssige Verbindung bewirkt wird. Als Verbindungsmittel weist ein Ankerelement mindestens einen Vorsprung oder vorstehenden Abschnitt auf, der zumindest teilweise quer zur Längsrichtung von dem Zugarmierungselement vorsteht. Dadurch wird bezüglich der Längsrichtung ein Hinterschnitt gebildet, der quer zur Längserstreckung in das Material des Riegelelements eingreift. Über diesen oder diese vorstehenden Bereiche wird eine in das Zug-armierungselement in Längsrichtung eingeleitete Zugkraft in die das Ankerelement umgebenden Bereiche eingeleitet, beispielsweise in den das Ankerelement umschließenden Kunststoff, wenn das Zugarmierungselement im Kunststoff-Spritzguss in das Riegelelements eingebettet ist. Alternativ kann ein Ankerelement durch quer zur Längserstreckung ausgebildete Verformungen über seinen Verlauf in Längsrichtung und/oder an den Enden des Riegelelements realisiert werden, beispielsweise durch Bögen, Wellen, Knicke oder spiral- oder schraubenförmige Formung eines langgestreckten, draht- oder stabförmigen Grundkörpers des Ankerelements gebildet werden. Beispielsweise kann ein Metalldrahtabschnitt an den Enden - bevorzugt an beiden Enden - entsprechend in Form gebogen werden. Im Ergebnis sorgt ein Ankerelement für eine besonders auf Zug belastbare Verbindung des Riegelelements mit dem Grundkörper der erfindungsgemäßen Sicherungsvorrichtung, und zwar insbesondere im Bereich des auf Zug beanspruchten Riegelelements.

Gegebenenfalls kann sich das Zugarmierungselement mit einem Ankerelement in Längsrichtung über das Riegelelement hinaus bis zum oder in das Griffelement erstrecken. Dadurch kann eine besonders zugfeste Verbindung zwischen dem Griffelement und dem Riegelelement hergestellt werden.

Vorzugsweise kann jeweils ein Ankerelement in einem Endbereich des Zugarmierungselements angeordnet sein. Auf diese Weise bleiben die Bereiche des Riegelements, in denen sich die Endbereiche des Ankerelements befinden, durch das Ankerelement in Längsrichtung zugfest miteinander verbunden, auch wenn das Material des Riegelelements im Verlauf des Zugarmierungselements bricht, reißt oder anders beschädigt wird.

Eine vorteilhafte Weiterbildung der Erfindung sieht vor, dass das Riegelelement ein quer zur Längsrichtung angeordnetes Haltemittel aufweist. Ein Haltemittel kann beispielsweise gebildet werden durch eine in das Riegelelement bezüglich seiner Längserstreckung seitlich eingeformte Vertiefung, die quer zur Längsrichtung nut- oder rillenartig geformt sein kann. Alternativ kann ein Haltemittel durch einen von dem Riegelelement bezüglich seiner Längserstreckung seitlich vorstehenden Vorsprung gebildet werden, beispielsweise einen angeformten Nocken oder Steg. Sowohl ein als Steg als auch ein als Vertiefung ausgebildetes Haltemittel weist mindestens eine Stützfläche auf, welche quer zur Längsrichtung steht. Mit dieser Stützfläche kann sich die Sicherungsvorrichtung im eingesetzten Zustand bezüglich einer Bewegung in Längsrichtung aus der Lenksäule hinaus an einer korrespondierenden Gegenfläche der Manteleinheit abstützen. Das oder die Haltemittel sorgen dadurch für eine sichere, formschlüssige Fixierung der Sicherungsvorrichtung in eingesetztem Zustand. Die Haltemittel können bevorzugt eine Rastvertiefung oder -vorsprung aufweisen. Derartig ausgebildete Haltemittel können beim Einsetzen der Sicherungsvorrichtung elastisch mit dem Rand der Öffnung in der Manteleinheit in Eingriff kommen, d.h. die beim Einstecken des Riegelelements in der gesicherten Endposition einrasten oder einschnappen und in dieser Position definiert fixiert sind. Die Abmessungen der Haltemittel werden so gewählt, dass eine elastische Verformung der Sicherungsvorrichtung quer zur Längsrichtung beim Einsetzen und Herausnehmen zum Ein- bzw. Ausrasten der Haltemittel erfolgen kann. Dies kann beispielsweise durch eine Gestaltung des Riegelelements aus einem elastischen Kunststoffmaterial erreicht werden. Um die beim Ein- und Ausrasten auftretenden Zugkräfte in Längsrichtung zu begrenzen, können die Haltemittel bezüglich der Längsrichtung gerundet oder abgeflacht geformt sein, oder auch widerhakenförmig zur Erhöhung der Haltewirkung.

Falls die Haltemittel eine Rastvertiefung oder-nut umfassen, die seitlich in das Riegelelement eingeformt ist, kann dadurch der Materialquerschnitt des Riegelelements lokal verringert werden. Dadurch könnte im Stand der Technik ein Abbrechen oder Abreißen des Riegelelements in dem Bereich der Vertiefung begünstigt werden. Zum Ausgleich dieser strukturellen Schwächung ist es vorteilhaft, dass sich ein erfindungsgemäßes Zugarmierungselement über den Bereich der Vertiefung erstreckt und dadurch die Abschnitte des Riegelelements beiderseits der Vertiefung zugfest miteinander verbindet.

Es kann weiterhin vorgesehen sein, dass an dem Riegelelement ein quer zur Längsrichtung federnd abstehendes Federelement angeordnet ist. Das Federelement stützt sich bezüglich der Längserstreckung seitlich federnd an dem Riegelelement ab, d.h. es kann quer zur Längsrichtung elastisch quer gegen das Riegelelement angedrückt werden. Entsprechend kann sich das Federelement elastisch an der Innenwand der Öffnung in der Manteleinheit bzw. der Lenkwelle seitlich abstützen und dadurch das Riegelelement federnd in der in die Lenksäule eingesetzten Fixierposition verspannen. Durch die von dem Federelement ausgeübte Federkraft wird das Riegelelement reibschlüssig fixiert, oder, falls Haltemittel wie vorangehend beschrieben vorhanden sind, formschlüssig fixiert. Die Auslenkung und die Federkraft wird auf die Abmessungen der Öffnung in der Manteleinheit abgestimmt, so dass die Haltekraft für eine sichere reibschlüssige Fixierung ausreicht, dabei aber die zum Herausziehen der Sicherungsvorrichtung erforderliche Zugkraft begrenzt bleibt, auch wenn zusätzliche Haltemittel vorhanden sind. Das Federelement kann bevorzugt aus Kunststoff einstückig mit dem Riegelelement als Kunststoff-Spritzgussteil ausgebildet sein. Es kann beispielsweise durch eine im vorderen Endbereich des Riegelelements angebrachte Blattfeder gebildet werden, die mit ihrem freien Ende in Richtung zum Griffelement unter spitzem Winkel zur Längsrichtung absteht. Falls die Sicherungsvorrichtung Haltemittel aufweist, kann das Federelement vorzugsweise auf der dem Haltevorsprung oder der Haltevertiefung gegenüberliegenden Längsseite des Riegelelements angeordnet werden.

Ein erfindungsgemäßes Verfahren zur Sicherung einer Lenksäule für ein Kraftfahrzeug, die eine Manteleinheit und eine drehbar in dieser gelagerte Lenkwelle aufweist, mit einer Sicherungsvorrichtung, umfassend ein langgestrecktes Riegelelement, welches sich in einer Längsrichtung erstreckt, an dessen einem Ende ein Griffelement angebracht ist und dessen anderes Ende als freies Ende ausgebildet ist, wobei zur zeitweiligen Blockierung einer Drehbewegung der Lenkwelle relativ zur Manteleinheit das Riegelelement durch eine Öffnung in der Manteleinheit hindurch in Eingriff gebracht wird mit einem Formschlusselement der Lenkwelle, sieht vor, dass das Formschlusselement eine quer zur Längserstreckung in der Außenfläche der Lenkwelle ausgebildete exzentrische Einformung aufweist, und das Riegelelement mit seinem freien Ende in den zwischen der Einformung und einer der Einformung gegenüberliegenden Innenfläche der Manteleinheit gebildeten Zwischenraum parallel zu einer Umfangsrichtung der Lenkwelle mit Abstand zur Längsachse der Lenkwelle eingeführt wird.

Gemäß dem erfindungsgemäßen Verfahren wird das Riegelelement durch eine Öffnung in der Manteleinheit eingesteckt, jedoch nicht wie im Stand der Technik durch eine radiale Durchgangsöffnung in der Lenkwelle hindurchgeführt, sondern in einen Raumbereich, der durch eine Außenseite der Lenkwelle im Bereich einer Einformung in besagter Außenseite , die als Abflachung oder Vertiefung ausgeführt sein kann, und der Innenseite der Manteleinheit begrenzt wird. Das bedeutet, dass das Riegelelement in eingeführtem Zustand quer zu seiner Längserstreckung zur Längsachse der Lenkwelle radialen Abstand hat, und an einem unrunden Querschnittsbereich der Lenkwelle anliegt. Der unrunde Querschnitt wird im Bereich der Einformung durch das eingesetzte Riegelelement bezüglich einer Drehung relativ zur Manteleinheit formschlüssig gesichert. Ein besonderer Vorteil dieser Art der Fixierung ist, dass die Lenkwelle auf ihren Außenumfang eine Abflachung oder Vertiefung aufweist, jedoch keine radiale Durchgangsöffnung hat. Dadurch ergibt sich eine geringere Schwächung der Lenkwelle, was einer erhöhten Belastbarkeit und damit Sicherheit zugutekommt. Vorteilhafterweise wird für das erfindungsgemäße Verfahren eine erfindungsgemäße Sicherungsvorrichtung in Ausführungsformen wie vorangehend beschrieben verwendet.

Die Herstellung einer erfindungsgemäßen Sicherungsvorrichtung kann durch das nachfolgend dargestellte Verfahren erfolgen, umfassend folgende Schritte:
- Bereitstellen einer Spritzgussform, wobei die Spritzgussform zumindest einen Oberspritzgussform und eine Unterspritzgussform umfasst,
- Einlegen eines Zugarmierungselements auf eine in der Oberspritzgussform und/ oder Unterspritzgussform ausgebildeten Haltestruktur,
- Schließen der Oberspritzgussform und Unterspritzgussform zur Spritzgussform,
- Einfüllen der Schmelze, bevorzugt Kunststoffschmelze,
- Öffnen der Spritzgussform nach dem zumindest teilweise Erstarren der Schmelze,
- Entnahme der Sicherungsvorrichtung aus der Oberspritzgussform oder Unterspritzgussform.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer schematischen perspektivischen Ansicht mit einer eingesetzten erfindungsgemäßen Sicherungsvorrichtung in gesichertem Zustand,
- Figur 2: eine Stelleinheit einer Lenksäule gemäß Figur 1 in perspektivischer Ansicht mit einer eingesetzten erfindungsgemäßen Sicherungsvorrichtung in gesichertem Zustand,
- Figur 3: eine perspektivische Ansicht der erfindungsgemäßen Sicherungsvorrichtung,
- Figur 4: eine Draufsicht mit teilweisem Längsschnitt der erfindungsgemäßen Sicherungsvorrichtung gemäß Figur 3,
- Figur 5: ein Längsschnitt durch eine Stelleinheit gemäß Figur 2,
- Figur 6: eine Detailansicht aus Figur 3 in gesichertem Zustand,
- Figur 7: eine Detailansicht wie in Figur 4 in teilweise gesichertem Zustand,
- Figur 8: eine Detailansicht wie in Figur 4 in teilweise gesichertem Zustand,
- Figur 9: eine Detailansicht wie in Figur 4 in gesichertem Zustand mit beschädigter Sicherungsvorrichtung,
- Figur 10: eine Lenksäule in einer schematischen perspektivischen Ansicht mit einer eingesetzten erfindungsgemäßen Sicherungsvorrichtung in gesichertem Zu-stand in einer zweiten Ausführungsform,
- Figur 11: eine Lenksäule in einer schematischen perspektivischen Ansicht mit einer eingesetzten erfindungsgemäßen Sicherungsvorrichtung in gesichertem Zu-stand in einer dritten Ausführungsform, und
- Figur 12: ein weiterer Längsschnitt durch eine Stelleinheit gemäß Figur 2.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

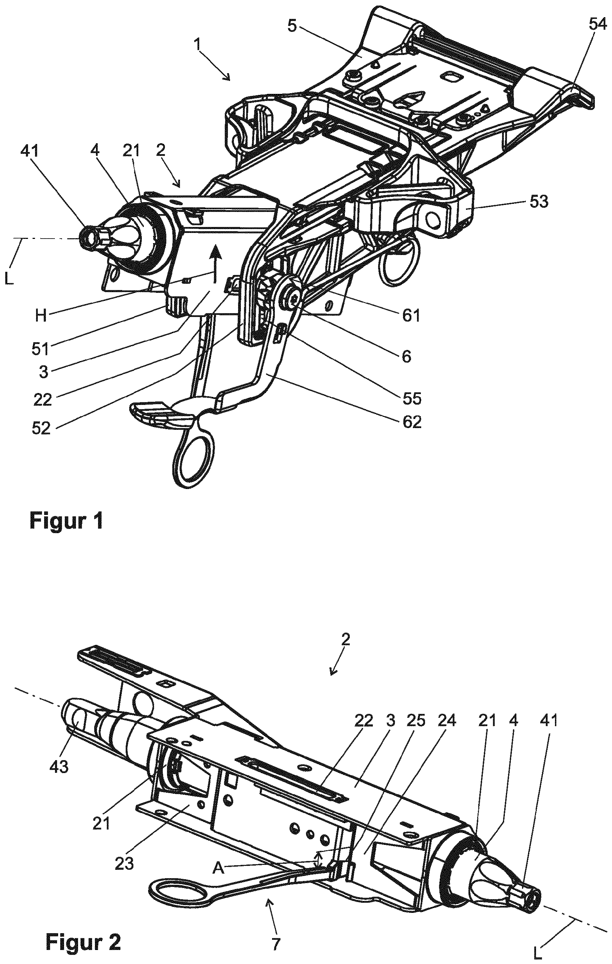

Figur 1 zeigt eine Lenksäule 1 mit einer Stelleinheit 2, welche eine Manteleinheit 3 aufweist, in der eine Lenkwelle 4 um ihre Längsachse L drehbar gelagert ist. In der dargestellten Bauform ist die Manteleinheit 3 kastenförmig gestaltet, wobei die Lenkwelle 4 in Lagern 21, bevorzugt in Wälzlagern, die als Schrägkugellager in O-Anordnung ausgebildet sind, gelagert ist.

An dem Fahrer zugewandten, bezogen auf die Fahrtrichtung eines nicht dargestellten Fahrzeugs, in dem die Lenksäule 1 angebracht werden kann, hinteren Endbereich 41 der Lenkwelle 4 kann ein hier nicht dargestelltes Lenkrad drehfest montiert werden. Ein zweiter Endbereich 43 der Lenkwelle 4 kann mit einer Gabel eines hier nicht dargestellten Universalgelenks einer Gelenkzwischenwelle verbunden werden.

Eine Konsoleneinheit 5 weist zwei Seitenwangen 51 und 52 auf, zwischen denen die Stelleinheit 2 angeordnet ist. Weiterhin umfasst die Konsoleneinheit 5 Befestigungsmittel 53 und 54 zur Befestigung der Lenksäule 1 an einer Fahrzeugkarosserie bzw. dem mit der Fahrzeugkarosserie verbundenen Fahrzeugquerträger.

Die Seitenwangen 51 und 52 weisen Öffnungen 55 auf, die als längs zu einer Höhenrichtung H ausgerichtete Langlöcher ausgebildet sind. Eine Spannachse 6 erstreckt sich durch die Öffnungen 55 und in der Stelleinheit 2 ausgebildete Öffnungen 22, die ebenfalls als Langlöcher ausgebildet sind, die entlang der Lenkwelle 4, d.h. parallel zur Längsachse L verlaufen.

Auf der Spannachse 6 ist ein Spanngetriebe 61, in dieser Ausführung ein Keilscheiben-Nocken-Spanngetriebe, angeordnet, welches durch eine Drehung der Spannachse 6 mittels eines an der Spannachse 6 angebrachten Betätigungshebels 62 betätigt werden kann. In gelöstem Zustand des Spanngetriebes 61 ist die Stelleinheit 2 zwischen den Seitenwangen 51 und 52 in Höhenrichtung H durch Bewegung der Spannachse 6 entlang der Öffnungen 55 und in Längsrichtung parallel zur Längsachse L durch Bewegung der Spannachse 6 entlang der Öffnungen 22 verschiebbar, wodurch die Position eines am Endbereich 41 der Lenkwelle 4 angebrachten Lenkrads relativ zum Fahrer höhen- und längsverstellbar ist.

Zur Fixierung der Lenkradposition wird die Spannachse 6 mittels des Betätigungshebels 62 verdreht, wodurch das Spanngetriebe 61 betätigt wird. Dabei werden die beiden Seitenwangen 51 und 52 gegeneinander bewegt, so dass die Manteleinheit 3 der dazwischen angeordneten Stelleinheit 2 fest relativ zur Konsoleneinheit 5 verspannt wird. Damit befindet sich die Lenksäule 1 im festgestellten Zustand.

In Figur 2 ist die Stelleinheit 2 umfassend die Manteleinheit 3 und die Lenkwelle 4 in einer perspektivischen Ansicht dargestellt, wobei die Unterseite dem Betrachter nach links unten zugewandt ist. Auf der Unterseite weist die Manteleinheit 3 Aufnahmen 23 und 24 auf, an denen beispielsweise ein Lenkradschloss, eine Wegfahrsperre oder dergleichen an der Lenksäule 1 montiert werden kann. Die Montage dieser Funktionselemente wie auch eines Lenkrads an der Lenksäule 1 erfordert eine vorgegebene Winkelorientierung der Lenkwelle 4 relativ zur Manteleinheit 3.

Die Manteleinheit weist weiterhin eine Öffnung 25 auf, die im dargestellten Beispiel als Durchgangsöffnung bzw. Durchbrechung in der Unterseite ausgebildet ist und einen Zugang quer zur Lenkwelle 4 freigibt. In die Öffnung ist eine erfindungsgemäße Sicherungsvorrichtung 7 eingesetzt.

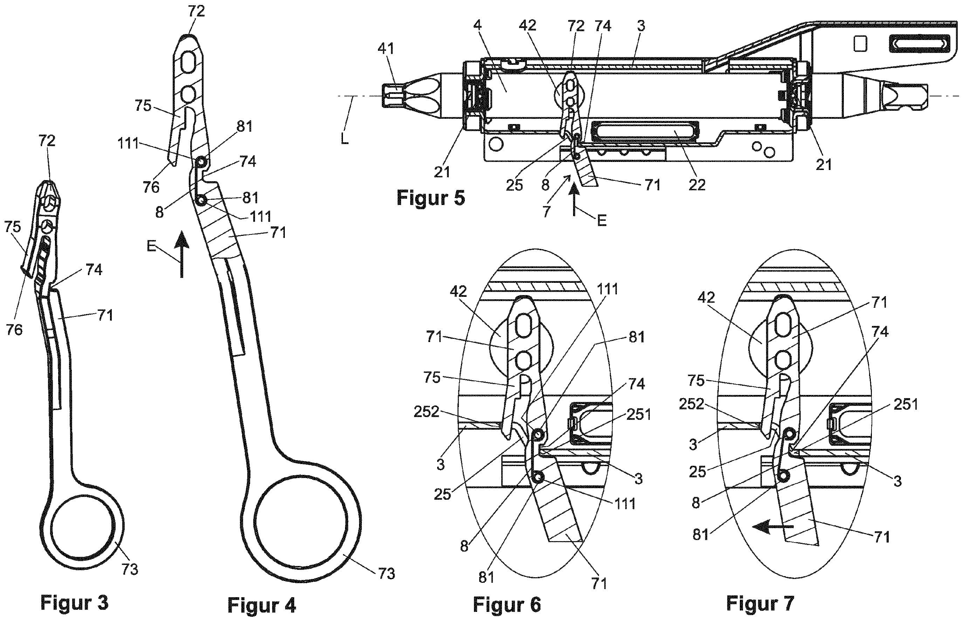

Die Sicherungsvorrichtung 7 ist in detaillierter Ansicht in Figur 3 perspektivisch und in Figur 4 in Draufsicht bzw. teilweise im Längsschnitt dargestellt. Die Sicherungsvorrichtung 7 umfasst ein langgestrecktes Riegelelement 71, das sich in der mit einem Pfeil angedeuteten Längsrichtung E erstreckt. Das in Längsrichtung E vordere Ende 72 des Riegelelements 71 ist als freies Ende ausgebildet. Am bezüglich der Längsrichtung hinteren Ende ist ein Griffelement 73 an dem Riegelelement 71 angebracht, im vorliegenden Beispiel ein Griffring.

In das Riegelelement 71 ist seitlich eine Rastnut 74 eingeformt, welche ein Haltemittel bildet.

Auf der der Rastnut 74 gegenüberliegenden Längsseite ist ein Federelement 75 an dem Riegelelement 71 angebracht. Das Federelement 75 ist als Blattfeder ausgebildet, die am vorderen Ende mit dem Riegelelement 71 verbunden ist und deren hinteres, freies Ende 76 bezüglich der Längsrichtung E schräg nach hinten seitlich vom Riegelelement 71 absteht. Dabei kann das freie Ende 76 des Federelements 75 elastisch federnd gegen das Riegelelement 71 bewegt werden.

Das Riegelelement 71 ist als Kunststoff-Spritzgussteil ausgebildet. Im Bereich der Rastnut 74 ist ein erfindungsgemäßes Zugarmierungselement 8 fest in den Kunststoff eingebettet, bevorzugt durch Umspritzen. Wie in dem teilweisen Längsschnitt in Figur 4 deutlich erkennbar ist, erstreckt sich das Zugarmierungselement 8 in Längsrichtung E über einen Teilbereich des Riegelelements 71. Das Zugarmierungselement 8 kann bevorzugt als Drahtabschnitt aus Stahldraht ausgebildet sein. Durch Umbiegung des Drahts sind an den Enden des Zugarmierungselements 8 Ankerelemente 81 ausgebildet, wobei die Ankerelemente 81 jeweils eine Ausnehmung 111 umgeben, welche ein Resultat der Haltestruktur der Spritzgussform darstellt. Diese Haltestruktur der Spritzgussform dient zum Halten und Positionieren des Zugarmierungselements 8 in der Spritzgussform, so dass das Zugarmierungselement 8 von der Schmelze umflossen werden kann. Nach dem Erstarren der Schmelze und dem Herauslösen der Sicherungsvorrichtung aus der Spritzgussform bleiben die Ausnehmungen 111 in der Umspritzung als Negativ der Haltestruktur zurück. Die Haltestruktur ist bevorzugt aus zwei Haltestiften ausgebildet, wobei jeder Haltestift bevorzugt an seinem freien Ende eine Fase aufweist oder der Haltestift bevorzugt als Konus bzw. als Kegel oder Kegelstumpf ausgebildet ist. Dieses bietet den Vorteil einer verbesserten Positionierung des Zugarmierungselements und der besseren Entformung der Sicherungsvorrichtung 7 aus der Spritzgussform. Im dargestellten Beispiel sind dies schlaufenförmig, seitlich bezüglich der Längserstreckung des Drahts abgebogene Abschnitte. Die Ankerelemente 81 bilden bezüglich der Längsrichtung E Hinterschnitte, die vom Kunststoff umschlossen sind und somit für eine zugfeste Verankerung des Zugarmierungselements 8 im Riegelelement 71 sorgen.

Im eingesetzten Zustand steht das Riegelelement 71 quer zur Längsachse L der Lenkwelle 4. Zur Längsachse L hat die Sicherungsvorrichtung 7 einen radialen Abstand A, wie in Figur 2 gezeigt. Dieselbe Situation ist im Schnitt parallel zur Längsachse L in Figur 5 dargestellt. Daraus geht hervor, wie das Riegelelement 71 durch die Öffnung 25 hindurch zwischen die Innenwand der Manteleinheit 3 und der Lenkwelle 4 eingreift. Um eine drehfeste Fixierung zu bewirken, weist die Lenkwelle 4 eine in ihre Umfangsfläche radial eingeformte Einformung 42 auf, die als Abflachung oder Vertiefung ausgebildet sein kann, so dass dort ein unrunder Querschnitt der Lenkwelle 4 gebildet wird. Dadurch, dass das Riegelelement 71 formschlüssig in dem Raum zwischen der Einformung 42 und der Innenseite des Manteleinheit 3 eingreift, und sich bezüglich einer Drehung der Lenkwelle 4 in Umfangsrichtung in der Öffnung 25 an der Manteleinheit 3 abstützt, wird die Lenkwelle 4 in der Manteleinheit 3 gegen Verdrehung fixiert, d.h. gesichert.

Figur 6 zeigt in einer vergrößerten Detailansicht von Figur 5, wie das Riegelelement 71 in eingesetztem Zustand in der Öffnung 25 sitzt, wobei ein Randbereich 251 der Öffnung 25 in die Rastnut 74 eingreift, d.h. eingerastet ist, und sich das Riegelelement 71 an dem gegenüberliegenden Randbereich 252 mit dem Federelement 75 federnd abstützt, so dass die Rastnut 74 federbelastet gegen den besagten Randbereich 251 angedrückt wird.

Zum Lösen der Sicherungsvorrichtung 1 wird das Riegelelement 71 auf den Randbereich 252 zu verschwenkt, wie in Figur 7 mit dem Pfeil angedeutet. Dabei wird das Federelement 75 federnd zusammengerückt und der Randbereich 251 aus der Rastnut 74 freigegeben.

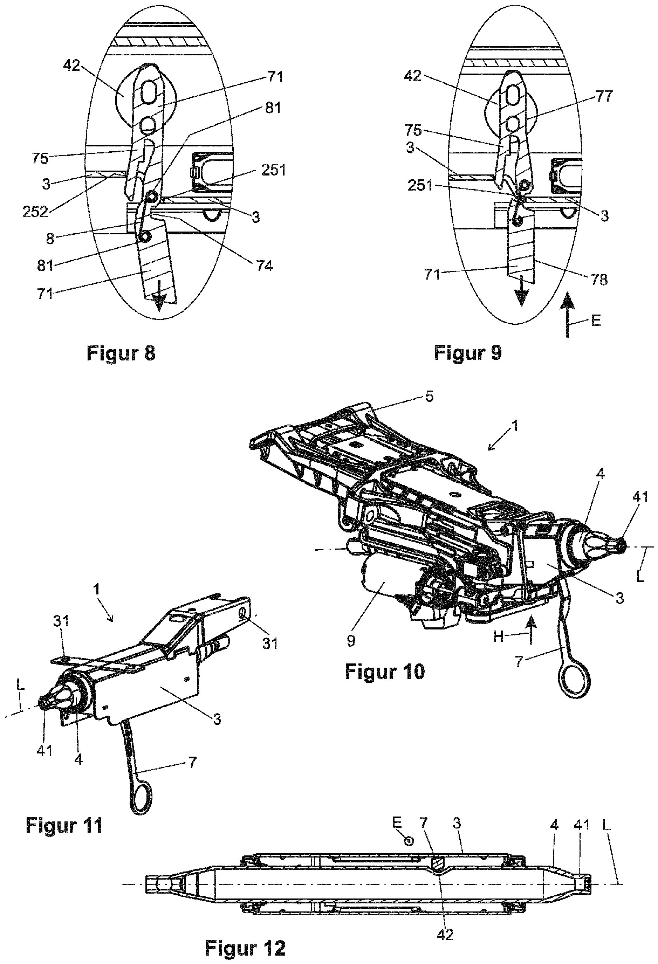

Anschließend kann das Riegelelement 71 mit der Hand an dem Griffelement 73 gegriffen und entgegen der Längsrichtung E, wie in Figur 8 mit dem Pfeil angedeutet, aus der Öffnung 25 herausgezogen werden.

Bedingt durch die strukturelle Schwächung des Riegelelements 71 durch die Rastnut 74 kann der Kunststoff durch unsachgemäßes, zu starkes Verbiegen beim Entriegeln gemäß Figur 7, oder durch unvollständiges Entriegeln der Rastnut 74 und Ausübung einer zu hohen Zugkraft in der Situation gemäß Figur 8 auf das Griffelement 73, lokal auf Zug und /oder Biegung und/oder Torsion überbeansprucht werden. Dadurch kann das Riegelement 71 im Bereich der Rastnut 74 brechen oder reißen, so dass Bruchteile 77 und 78 entstehen, wie dies in Figur 9 gezeigt ist. In dieser im Stand der Technik kritischen Situation bleiben bei der Erfindung die Bruchteile 77 und 78 durch das erfindungsgemäße Zugarmierungselement 8 zugfest miteinander verbunden, so dass die Sicherungsvorrichtung als Ganzes sicher entgegen der Längsrichtung E wie mit dem Pfeil eingezeichnet aus der Manteleinheit 3 herausgezogen werden kann.

Die erfindungsgemäße Sicherungsvorrichtung 8 kann gleichwirkend an einer elektrisch verstellbaren Lenksäule 1 gemäß Figur 10 eingesetzt werden, bei der die Höhen- und Längsverstellung mittel elektrischer Stellantriebe 9 erfolgen kann. Gleichermaßen kann die Erfindung in einer einfachen Bauform einer Lenksäule 1 verwendet werden, wie in Figur 11 schematisch gezeigt, welche keine Verstelleinrichtungen, sondern lediglich die relevanten Funktionselemente Manteleinheit 3 und Lenkwelle 4 aufweist. Diese Manteleinheit 3 kann mittels Befestigungselementen 31 unmittelbar an einer Fahrzeugkarosserie befestigt werden.

In der Figur 12 ist ein schematisierter Schnitt durch die Stelleinheit 2 gemäß Figur 2 entlang der Längsachse L und orthogonal zur Einsteckrichtung E dargestellt. In diesem Schnitt ist das Zusammenwirken der Sicherungsvorrichtung 7, der Einformung 42 der Lenkwelle 4 und der Manteleinheit 3. Die Einformung 42 der Lenkwelle 4 ist nutenartig ausgebildet und wirkt mit der Sicherungsvorrichtung 7 zusammen.

Durch das erfindungsgemäße Zugarmierungselement 8 wird sicher verhindert, dass auch eine aus oberflächenschonendem, relativ weichem Kunststoff gefertigte Sicherungsvorrichtung 7 bricht oder reißt und Bruchstücke in der Lenksäule 1 zurückbleiben

**Bezugszeichenliste**

| | | | |
|---|---|---|---|
| 1 | Lenksäule | 6 | Spannachse |
| 111 | Ausnehmung | 61 | Spanngetriebe |
| 2 | Stelleinheit | 62 | Betätigungshebel |
| 21 | Lager | 7 | Sicherungsvorrichtung |
| 22 | Öffnungen | 71 | Riegelelement |
| 23, 24 | Aufnahmen | 72 | vorderes Ende |
| 25 | Öffnung | 73 | Griffelement |
| 251, 252 | Randbereiche | 74 | Rastnut |
| 3 | Manteleinheit | 75 | Federelement |
| 31 | Befestigungselemente | 76 | freies Ende |
| 4 | Lenkwelle | 77, 78 | Bruchteile |
| 41 | Endbereich | 8 | Zugarmierungselement |
| 42 | Einformung | 81 | Ankerelemente |
| 43 | zweiter Endbereich | 9 | Stellantrieb |
| 5 | Konsoleneinheit | L | Längsachse |
| 51, 52 | Seitenwangen | H | Höhenrichtung |
| 53, 54 | Befestigungsmittel | A | Abstand |
| 55 | Öffnungen | E | Längsrichtung |

## Patentansprüche

1. Sicherungsvorrichtung (7) für eine Lenksäule (1) für ein Kraftfahrzeug, die einsetzbar ist zwischen einer Manteleinheit (3) und einer drehbar in dieser gelagerten Lenkwelle (4) zur zeitweiligen Blockierung einer Drehbewegung der Lenkwelle (4) relativ zur Manteleinheit (3), umfassend ein langgestrecktes Riegelelement (71), welches sich in Längsrichtung (E) erstreckt, an dessen einem Ende ein Griffelement (73) angebracht ist und dessen anderes Ende als freies Ende (72) ausgebildet ist, welches aus Kunststoffmaterial ausgebildet ist, wobei sich zumindest über einen Teilbereich der Längsrichtung (E) des Riegelelements (71) ein Armierungselement (8) erstreckt,
**dadurch gekennzeichnet,**
**dass** das Armierungselement als Zugarmierungselement (8) ausgebildet ist, welches zumindest teilweise oder vollständig von dem Material des Riegelelements (71) umschlossen ist, und welches in Längsrichtung (E) zugfest mit dem Kunststoffmaterial des Riegelelements (71) verbunden ist, wobei das Riegelelement (71) als Kunststoff-Spritzgussteil ausgebildet ist und das Zugarmierungselement (8) von dem Kunststoffmaterial umspritzt ist.

2. Sicherungsvorrichtung nach Anspruch 1, **dadurch gekennzeichnet, dass** das Riegelelement (71) ein erstes Material umfasst, und das Zugarmierungselement (8) ein zweites Material umfasst, wobei das zweite Material eine höhere Reißfestigkeit und/oder höhere Zähigkeit und/oder höhere Biegefestigkeit und/oder höheres Elastizitätsmodul als der erste Werkstoff des Riegelelements (71) aufweist.

3. Sicherungsvorrichtung nach Anspruch 1 oder 2, **dadurch gekennzeichnet, dass** das Zugarmierungselement (8) aus Metall ausgebildet ist.

4. Sicherungsvorrichtung nach einem der vorangehenden Ansprüche, **dadurch gekennzeichnet, dass** das Zugarmierungselement (8) mindestens ein faserförmiges Element umfasst.

5. Sicherungsvorrichtung nach einem der vorangehenden Ansprüche, **dadurch gekennzeichnet, dass** das Zugarmierungselement (8) zumindest ein Ankerelement (81) aufweist.

6. Sicherungsvorrichtung nach einem der vorangehenden Ansprüche, **dadurch gekennzeichnet, dass** das Riegelelement (71) ein quer zur Längsrichtung (E) angeordnetes Haltemittel (74) aufweist.

7. Sicherungsvorrichtung nach einem der vorangehenden Ansprüche, **dadurch gekennzeichnet, dass** an dem Riegelelement (71) ein quer zur Längsrichtung (E) federnd abstehendes Federelement (75) angeordnet ist.

8. Verfahren zur Sicherung einer Lenksäule (1) für ein Kraftfahrzeug, die eine Manteleinheit (3) und eine drehbar in dieser gelagerte Lenkwelle (4) aufweist, mit einer Sicherungsvorrichtung (7) nach Anspruch 1, umfassend ein langgestrecktes Riegelelement (71), welches sich in einer Längsrichtung (E) erstreckt, an dessen einem Ende ein Griffelement (73) angebracht ist und dessen anderes Ende als freies Ende (72) ausgebildet ist, wobei zur zeitweiligen Blockierung einer Drehbewegung der Lenkwelle (3) relativ zur Manteleinheit (4) das Riegelelement (71) durch eine Öffnung (25) in der Manteleinheit (3) hindurch in Eingriff gebracht wird mit einem Formschlusselement (42) der Lenkwelle (4), **gekennzeichnet dadurch, dass** das Formschlusselement (42) eine quer zur Längserstreckung in der Außenfläche der Lenkwelle ausgebildete exzentrische Einformung (42) aufweist, und das Riegelelement (71) mit seinem freien Ende (72) in den zwischen der Einformung (42) und einer der Einformung (42) gegenüberliegenden Innenfläche der Manteleinheit (3) gebildeten Zwischenraum parallel zu einer Umfangsrichtung der Lenkwelle (4) mit Abstand zur Längsachse (L) der Lenkwelle (4) eingeführt wird.

## Claims

1. Securing apparatus (7) for a steering column (1) for a motor vehicle, which securing apparatus (7) can be used between a casing unit (3) and a steering shaft (4) which is mounted rotatably in the said casing unit (3), for temporarily blocking a rotational movement of the steering shaft (4) relative to the casing unit (3), comprising an elongate bar element (71) which extends in the longitudinal direction (E), and to one end of which a handle element (73) is attached and the other end of which is configured as a free end (72) which is configured from plastic material, a reinforcing element (8) extending at least over a part region of the longitudinal direction (E) of the bar element (71), **characterized in that** the reinforcing element is configured as a tensile reinforcing element (8) which is enclosed at least partially or completely by the material of the bar element (71), and which is connected to the plastic material of the bar element (71) in a tension-resistant manner in the longitudinal direction (E), the bar element (71) being configured as a plastic injection moulded part, and the tensile reinforcing element (8) being overmoulded by the plastic material.

2. Securing apparatus according to Claim 1, **characterized in that** the bar element (71) comprises a first material, and the tensile reinforcing element (8) comprises a second material, the second material having a higher tear resistance and/or a higher durability and/or a higher bending strength and/or a higher modulus of elasticity than the first material of the bar element (71) .

3. Securing apparatus according to Claim 1 or 2, **characterized in that** the tensile reinforcing element (8) is configured from metal.

4. Securing apparatus according to one of the preceding claims, **characterized in that** the tensile reinforcing element (8) comprises at least one fibrous element.

5. Securing apparatus according to one of the preceding claims, **characterized in that** the tensile reinforcing element (8) has at least one anchor element (81).

6. Securing apparatus according to one of the preceding claims, **characterized in that** the bar element (71) has a holding means (74) which is arranged transversely with respect to the longitudinal direction (E).

7. Securing apparatus according to one of the preceding claims, **characterized in that** a spring element (75) which projects in a sprung manner transversely with respect to the longitudinal direction (E) is arranged on the bar element (71).

8. Method for securing a steering column (1) for a motor vehicle, which steering column (1) has a casing unit (3) and a steering shaft (4) which is mounted rotatably in it, with a securing apparatus (7) according to Claim 1, comprising an elongate bar element (71) which extends in a longitudinal direction (E), and to one end of which a handle element (73) is attached and the other end of which is configured as a free end (72), the bar element (71) being brought into engagement through an opening (25) in the casing unit (3) with a positively locking element (42) of the steering shaft (4) for temporarily blocking a rotational movement of the steering shaft (3) relative to the casing unit (4), **characterized in that** the positively locking element (42) has an eccentric formed recess (42) which is configured in the outer face of the steering shaft transversely with respect to the longitudinal extent, and the bar element (71) is introduced with its free end (72) parallel to a circumferential direction of the steering shaft (4) at a spacing from the longitudinal axis (L) of the steering shaft (4) into the intermediate space which is formed between the formed recess (42) and an inner face of the casing unit (3), which inner face lies opposite the formed recess (42).

## Revendications

1. Dispositif de sécurité (7) qui est destiné à une colonne de direction (1) d'un véhicule automobile et qui peut être inséré entre une unité d'enveloppe (3) et un arbre de direction (4), monté de manière rotative dans celle-ci, pour bloquer temporairement le mouvement de rotation de l'arbre de direction (4) par rapport à l'unité d'enveloppe (3), le dispositif de sécurité comprenant un élément de verrouillage allongé (71) qui s'étend dans la direction longitudinale (E), à une extrémité duquel un élément de préhension (73) est fixé et dont l'autre extrémité est conçue comme une extrémité libre (72) qui est formée à partir d'une matière synthétique, un élément de renforcement (8) s'étendant au moins sur une zone partielle de la direction longitudinale (E) de l'élément de verrouillage (71),
**caractérisé en ce que**
l'élément de renforcement est conçu comme un élément de renforcement en traction (8) qui est au moins partiellement ou complètement enfermé par le matériau de l'élément de verrouillage (71) et qui est relié à la matière synthétique de l'élément de verrouillage (71) de manière à résister à la traction dans la direction longitudinale (E), l'élément de verrouillage (71) étant conçu comme une pièce moulée par injection en matière synthétique et l'élément de renforcement en traction (8) étant enrobé par la matière synthétique.

2. Dispositif de sécurité selon la revendication 1, **caractérisé en ce que** l'élément de verrouillage (71) comprend un premier matériau, et l'élément de renforcement en traction (8) comprend un deuxième matériau, le deuxième matériau ayant une résistance à la déchirure et/ou une ténacité plus élevée et/ou une résistance à la flexion plus élevée et/ou un module d'élasticité plus élevé que le premier matériau de l'élément de verrouillage (71).

3. Dispositif de sécurité selon la revendication 1 ou 2, **caractérisé en ce que** l'élément de renforcement en traction (8) est en métal.

4. Dispositif de sécurité selon l'une des revendications précédentes, **caractérisé en ce que** l'élément de renforcement en traction (8) comprend au moins un élément fibreux.

5. Dispositif de sécurité selon l'une des revendications précédentes, **caractérisé en ce que** l'élément de renforcement en traction (8) comporte au moins un élément d'ancrage (81).

6. Dispositif de sécurité selon l'une des revendications précédentes, **caractérisé en ce que** l'élément de verrouillage (71) comporte un moyen de retenue (74) disposé transversalement à la direction longitudinale (E).

7. Dispositif de sécurité selon l'une des revendications précédentes, **caractérisé en ce qu'**un élément à ressort (75) faisant saillie élastiquement transversalement à la direction longitudinale (E) est disposé sur l'élément de verrouillage (71).

8. Procédé de sécurisation d'une colonne de direction (1) d'un véhicule automobile, laquelle comporte une unité d'enveloppe (3) et un arbre de direction (4) monté de manière rotative dans celle-ci, au moyen d'un dispositif de sécurité (7) selon la revendication 1, comprenant un élément de verrouillage allongé (71) qui s'étend dans une direction longitudinale (E), à une extrémité duquel un élément de préhension (73) est fixé et dont l'autre extrémité est conçue comme une extrémité libre (72), l'élément de verrouillage (71) étant engagé à travers une ouverture (25), ménagée dans l'unité d'enveloppe (3), avec un élément à complémentarité de forme (42) de l'arbre de direction (4) afin de bloquer temporairement le mouvement de rotation de l'arbre de direction (3) par rapport à l'unité d'enveloppe (4), **caractérisé en ce que** l'élément à complémentarité de forme (42) comporte une indentation excentrique (42) formée transversalement à l'extension longitudinale dans la surface extérieure de l'arbre de direction et l'élément de verrouillage (71) est introduit avec son extrémité libre (72) dans l'espace intermédiaire, formé entre l'indentation (42) et la surface intérieur, opposée à l'indentation (42), de l'unité d'enveloppe (3), parallèlement à une direction circonférentielle de l'arbre de direction (4) à distance de l'axe longitudinal (L) de l'arbre de direction (4).
